# EUROPEAN PATENT SPECIFICATION

(11) **EP 3 372 196 B1**
(45) Date of publication and mention of the grant of the patent: **07.06.2023**
(21) Application number: 16861642.3
(22) Date of filing: 29.09.2016
(51) Int. Cl.: A61D 9/00, A01K 13/00, A61F 13/14, A01K 15/04, A01K 15/00

(54) **POST-SURGICAL PROTECTIVE GARMENT FOR PETS**
POSTOPERATIVE SCHUTZBEKLEIDUNG FÜR HAUSTIERE
VÊTEMENT DE PROTECTION POST-CHIRURGICALE POUR ANIMAUX DOMESTIQUES

(30) Priority: 03.11.2015 ES 201531194 U
(43) Date of publication of application: 12.09.2018
(73) Proprietor: Perez Morales, Eulalia, 08750 Molins de Rei (Barcelona) (ES)
(72) Inventor: Perez Morales, Eulalia, 08750 Molins de Rei (Barcelona) (ES)
(74) Representative: González Poveda, Sara
(86) International application number: PCT/ES2016/000109
(87) International publication number: WO 2017/077143

(56) References cited:
- WO-A2-2015/107479
- ES-A1- 2 121 697
- US-A- 4 489 676
- US-A1- 2004 211 370
- US-A1- 2007 199 521
- US-B1- 6 454 735
- US-B1- 6 454 735
- US-B1- 8 733 296
- DATABASE WPI Derwent Publications Ltd., London, GB; & JP 2005 287321 A (OOKA NORIKO) 20 October 2005
- DATABASE WPI Derwent Publications Ltd., London, GB; & WO 99 55145 A1 (ILIINSKAYA SVETLANA OLEGOVNA) 04 November 1999

## Description

### Object of the invention

The object of the invention is a post-surgical protective garment for pets, especially dogs and cats, which has construction features intended to guarantee a stable fastening of the garment; to apply compression on the wounds, thus protecting them from seromas, and to prevent rubbing on the wounds due to unwanted movements of the garment.

### State of the art

A high number of internal surgical procedures carried out on pets are carried out in the chest or stomach areas.

The protection of post-surgical wounds is usually carried out using bandages in order for the animal to touch the wounds a little as possible; however, these bandages can be detached fairly easily by the animal by using paws or teeth. US 6,454,735 B1 proposes a bandage for a torso of an animal, the bandage comprising a sheet member piece for covering the animal's torso and several fastening members.

In order to prevent the animal from licking or biting the post-surgical wounds, it is also common to use the so-called Elizabethan collar made from a sheet of plastic that is fixed on the collar and defines a frustoconical surface around the animal's head.

In some cases, the animal's body is covered with a tubular garment that completely surrounds the body thereof in order to prevent the animal from easily removing the bandages; however, these types of tubular garments cause wounds at the level of the armpit and groin, and they cannot be adapted to animals of different sizes, which means they are not particularly effective.

### Description of the invention

The post-surgical protective garment for pets according to the invention as defined in claim 1, which is especially applicable to dogs and cats, has construction features intended to cover the chest and abdomen of the animal, to enable the adaptation thereof to animals of different sizes, to exert a slight pressure on post-surgical wounds providing protection from seromas, and to prevent the garment from moving along the animal.

This post-surgical protective garment also has constructive features intended to incorporate, in an area forming a collar, a sheet of semi-rigid material, by way of a brace, which limits the movement of the animal's head towards the torso in order to prevent it from licking or biting the post-surgical wounds.

In order to achieve the proposed objectives, this protective garment comprises a central portion made from an elastic fabric and having dimensions suitable to cover the chest and abdomen of the animal, leaving the upper area of the body uncovered.

The sides of this central portion have: front extensions, intermediate extensions, and rear extensions, which are provided with adjustable fastening means and which form, respectively: a collar, a belt for fastening at the level of the chest and a belt for fastening at the level of the waist of the animal.

The incorporation in said extensions of adjustable fastening means enables the garment to be effectively adapted to animals of different sizes.

In the position of use of the garment, the front extensions forming the collar are arranged around the animal's neck; the belt for fastening at the level of the chest are arranged behind the front legs; and the belt for fastening at the level of the waist are arranged in front of the rear legs; such that in said position of use, the garment cannot move towards the front area or towards the rear area of the animal.

The possibility of opening and closing the collar and the belts for fastening the garment makes the operations of putting the garment on the animal and taking it off the same significantly easier compared to the tubular garments.

According to the invention, the central portion of the garment has two divergent straps at the rear end thereof, which are intended to be positioned behind the rear legs of the animal and provided with adjustable securing means on the rear extensions of the central portion of the garment.

According to the invention, the front extensions, forming the collar, have an internal longitudinal passage wherein a sheet of semi-rigid material is housed, which acts like a a brace, the purpose of which is to limit the movement of the animal's head towards the body. It is also provided that said passage has a closed end and an open end provided with a flap for retaining the semi-rigid sheet inside the passage.

These and other characteristics of the invention shall be more readily understandable in light of the exemplary embodiment shown in the attached figures.

### Description of the figures

As a complement to the description provided herein, and for the purpose of helping to make the characteristics of the invention more readily understandable, the present specification is accompanied by a set of drawings which, by way of illustration and not limitation, represent the following:

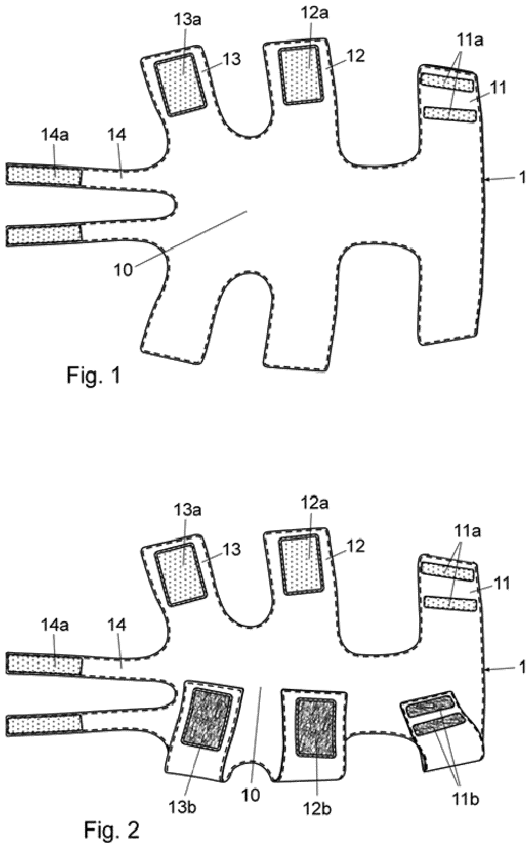

- Figure 1 shows an top plan view, as a net, of an exemplary embodiment of the post-surgical protective garment for pets according to the invention.
- Figure 2 shows a view similar to the previous figure wherein the extensions of one of the sides have been shown folded towards the upper area to show the fastening means that enable a collar to be made with said side extensions, a belt for fastening at the level of the chest and a belt for fastening at the level of the waist of the animal.
- Figure 3 shows an elevation view of the post-surgical protective garment of the previous figures placed in a position of use on the outline of an animal, specifically a dog.
- Figure 4 shows a top, plan view, as a net, of a variant embodiment of the post-surgical protective garment represented in the previous figures and that comprises a sheet of semi-rigid material that has been shown partially removed from a longitudinal passage defined in the front extensions constituting the collar.

### Preferred embodiment of the invention

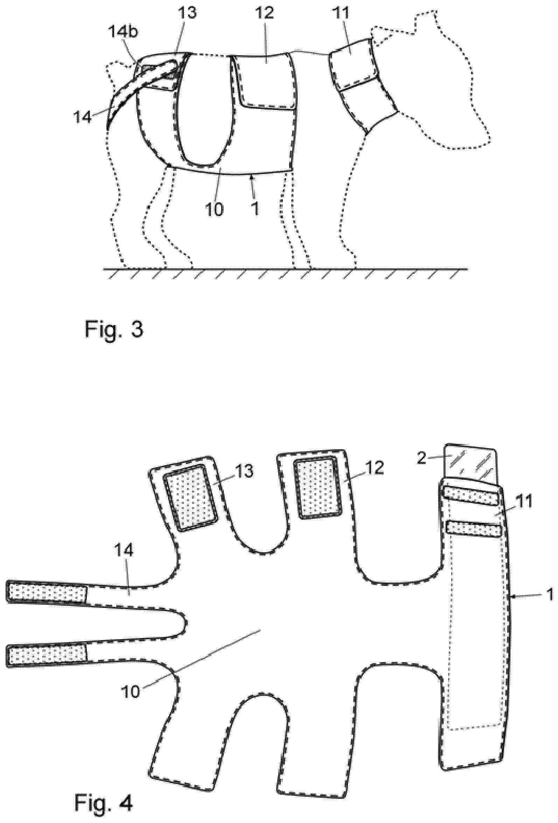

In the exemplary embodiment shown in the attached figures, the protective garment referenced as a whole as (1) is made from an elastic fabric and comprises a central portion (10) that has dimensions suitable to cover the chest and abdomen of the animal as shown in figure 3 and the sides have side extensions (11), intermediate extensions (12) and rear extensions (13) that have adjustable fastening means (11a, 11b, 12a. 12b, 13a, 13b), in this case made up of the two complementary portions of a contact fastening, although they could be any other means such as belts and buckles, buttons and eyelets or any pressure fastening. As shown in Figure 3, in the position of use, the front extensions (11) make a collar around the animal's neck, the extensions (12) form a fastening belt that is arranged at the level of the chest, behind the front legs of the animal;
and the rear extensions (13) form a fastening belt that is arranged at the level of the waist of the animal in front of the rear legs.

The adjustment of the extensions (11, 12, 13) enables the garment to be adapted to animals of different sizes and the central portion to exert pressure on the post-surgical wounds, providing protection from seromas.

In the example shown in the attached figures, the garment has, at the rear end of the central portion (10), two divergent straps (14) provided with adjustable securing means (14a, 14b) on the rear portions (13) of the garment.

As can be seen in figure 3, in the position of use, said divergent straps (14) are arranged behind the rear legs of the animal aiding in immobilising the garment in a longitudinal direction.

In this specific exemplary embodiment, the central portion (10), the rear straps (14) and the side extensions (11, 12, 13) are made by a single piece of multilayer elastic fabric.

In the variant embodiment shown is figure 4, the front extensions of the garment have an inner passage for housing a sheet (2) of semi-rigid material, for example plastic, which acts like a brace, making the collar of the garment rigid in order to limit the rotation of the animal's head towards the rear area.

Having sufficiently described the nature of the invention, in addition to a preferred exemplary embodiment, it is hereby stated for the relevant purposes that the materials, shape, size and layout of the described elements may be modified, provided that it does not imply altering the essential characteristics of the invention claimed below.

## Claims

1. A post-surgical protective garment for pets, especially dogs and cats, which comprises a central portion (10), made from an elastic fabric, having dimensions suitable to cover the chest and abdomen of the animal, the central portion having sides, and the sides have: front extensions (11), intermediate extensions (12), and rear extensions (13), which are provided with adjustable fastening means (11a, 11b) (12a, 12b) (13a, 13b) and which form, respectively: a collar, a belt for fastening at the level of the chest and a belt for fastening at the level of the waist of the animal; **characterised in that**:
the front extensions (11), forming the collar, have an internal longitudinal passage wherein a sheet (2) of semi-rigid material is housed, which acts like a brace, which makes the collar rigid, limiting the rotation of the animal's head towards the torso, and
the central portion (10) of the garment (1) has two rear straps (14) at the rear end thereof, which are intended to be positioned behind the rear legs of the animal and provided with adjustable securing means (14a, 14b) on the rear extensions (13) of the central portion (10) of the garment (1).

2. The garment, according to claim 1, **characterised in that** the longitudinal passage of the front extensions (11) has a closed end and an open end provided with a flap for retaining the semi-rigid sheet (2) inside the passage.

3. The garment, according to claim 1, **characterised in that** the central portion (10), the rear straps (14) and the front (11), intermediate (12) and rear (13) extensions are made from a single piece of either single-layer or multilayer elastic fabric.

## Patentansprüche

1. Postoperatives Schutzkleidungsstück für Haustiere, insbesondere Hunde und Katzen, das einen Mittelabschnitt (10) umfasst, der aus einem elastischen Stoff hergestellt ist und Abmessungen hat, die geeignet sind, die Brust und den Bauch des Tieres zu bedecken, wobei der Mittelabschnitt Seiten aufweist und die Seiten Folgendes aufweisen: vordere Verlängerungen (11), mittlere Verlängerungen (12) und hintere Verlängerungen (13), die mit einstellbaren Befestigungsmitteln (11a, 11b) (12a, 12b) (13a, 13b) versehen sind und jeweils Folgendes bilden: ein Halsband, einen Gurt zum Befestigen auf Höhe der Brust und einen Gurt zum Befestigen auf Höhe der Taille des Tieres; **dadurch gekennzeichnet, dass**:
die vorderen Verlängerungen (11), die das Halsband bilden, einen inneren Längsdurchlass aufweisen, in dem eine Platte (2) aus halbstarrem Material untergebracht ist, die wie ein Strebe wirkt, die das Halsband starr macht und die Drehung des Kopfes des Tieres in Richtung des Rumpfes einschränkt; und
der Mittelabschnitt (10) des Kleidungsstücks (1) zwei hintere Riemen (14) an seinem hinteren Ende aufweist, die dafür vorgesehen sind, hinter den Hinterbeinen des Tieres positioniert zu werden, und mit einstellbaren Befestigungsmitteln (14a, 14b) an den hinteren Verlängerungen (13) des Mittelabschnitts (10) des Kleidungsstücks (1) versehen sind.

2. Kleidungsstück nach Anspruch 1, **dadurch gekennzeichnet, dass** der Längsdurchlass der vorderen Verlängerungen (11) ein geschlossenes Ende und ein offenes Ende, das mit einer Lasche zum Halten der halbstarren Platte (2) innerhalb des Durchlasses versehen ist, aufweist.

3. Kleidungsstück nach Anspruch 1, **dadurch gekennzeichnet, dass** der Mittelabschnitt (10), die hinteren Riemen (14) und die vorderen (11), mittleren (12) und hinteren (13) Verlängerungen aus einem einzigen Stück aus entweder einlagigem oder mehrlagigem elastischem Gewebe hergestellt sind.

## Revendications

1. Vêtement de protection post-chirurgicale pour animaux domestiques, spécifiquement des chiens et des chats, qui comprend une partie centrale (10), réalisée à partir d'un tissu élastique, comportant des dimensions appropriées pour recouvrir la poitrine et l'abdomen de l'animal, la partie centrale ayant des côtés, et les côtés comportent : des extensions avant (11), des extensions intermédiaires (12), et des extensions arrière (13), qui sont pourvues de moyens de fixation réglables (11a, 11b) (12a, 12b) (13a, 13b) et qui forment, respectivement : un collier, une ceinture pour la fixation au niveau de la poitrine et une ceinture pour la fixation au niveau de la taille de l'animal ; **caractérisé en ce que** :
les extensions avant (11), formant le collier, comportent un passage longitudinal interne dans lequel est logée une feuille (2) de matériau semi-rigide, qui agit comme une attelle, ce qui rend le collier rigide, limitant la rotation de la tête de l'animal vers le torse, et
la partie centrale (10) du vêtement (1) comporte deux sangles arrière (14) à son extrémité arrière, qui sont destinées à être positionnées derrière les pattes arrière de l'animal et pourvues de moyens de fixation réglables (14a, 14b) sur les extensions arrière (13) de la partie centrale (10) du vêtement (1).

2. Vêtement, selon la revendication 1, **caractérisé en ce que** le passage longitudinal des extensions avant (11) comporte une extrémité fermée et une extrémité ouverte pourvue d'un volet de retenue de la feuille semi-rigide (2) à l'intérieur du passage.

3. Vêtement, selon la revendication 1, **caractérisé en ce que** la partie centrale (10), les sangles arrière (14) et les extensions avant (11), intermédiaires (12) et arrière (13) sont réalisées à partir d'une seule pièce de tissu élastique monocouche ou multicouche.
